# EUROPEAN PATENT APPLICATION

(11) **EP 4 030 645 A1**
(43) Date of publication of application: **20.07.2022**
(21) Application number: 20866695.8
(22) Date of filing: 14.08.2020
(51) Int. Cl.: H04B 17/391

(54) **INTERFERENCE SIMULATION SYSTEM, METHOD AND APPARATUS, INTERFERENCE TEST SYSTEM, METHOD AND APPARATUS, AND COMPUTER READABLE STORAGE MEDIUM**

(30) Priority: 18.09.2019 CN 201910882836
(71) Applicant: ZTE Corporation, Shenzhen, Guangdong 518057 (CN)
(72) Inventor: WANG, Jingmei, Shenzhen, Guangdong 518057 (CN); YANG, Zhe, Shenzhen, Guangdong 518057 (CN); ZHAO, Chi, Shenzhen, Guangdong 518057 (CN); REN, Chao, Shenzhen, Guangdong 518057 (CN)
(74) Representative: Betten & Resch
(86) International application number: PCT/CN2020/109222
(87) International publication number: WO 2021/052075

(57) **Abstract**

An interference simulation system, method, and apparatus, as well as an interference test system, method, and apparatus. The interference simulation system is provided at a transmitting end. The system comprises: a configuration unit (102) configured to configure interference parameters according to an interference model, wherein the interference model is generated according to a preset interference scenario and a simulation unit(104)configured to obtain the interference parameters and generate interference information according to the interference parameters, the simulation unit (104) being further configured to simulate the interference scenario at the transmitting end according to the interference information.

## Description

### CROSS-REFERENCE TO RELATED APPLICATION

This application is filed on the basis of the Chinese Patent Application No. 201910882836.1, filed on September 18, 2019, and claims priority of the Chinese Patent Application, the entire contents of which are incorporated herein by reference.

### TECHNICAL FIELD

The present disclosure relates to the field of communication, and in particular, to an interference simulation system, method and apparatus, an interference test system, method and apparatus, and a computer-readable storage medium.

### BACKGROUND

Due to the particularity of the wireless channel, the sent data will be subjected to various interferences in the wireless channel, resulting in varying degrees of damage to the data received by a receiving end. Specifically, channel interference will reduce the power of sent data in different time slots, or cause interference in certain frequency bands or sub carriers. In certain special scenarios, it is also possible that generate "targeted" interference is generated on specific time-domain and/or frequency-domain resources. The above-mentioned interferences may be caused by the natural environment, or may be caused by coverage or configuration coordination between systems, or caused by a user terminal. Therefore, in order to ensure the transmission quality of wireless communication, in a wireless communication system, it is necessary to test the receiving performance and anti-interference ability of a sending end (such as a base station) and a receiving end (such as a terminal device) of the system.

At present, when introducing or testing the above-mentioned interferences, generally two methods may be adopted. One method is to set up a channel simulator in the system to simulate the channel interference to the data. However, in the process of implementation of this method, the configuration of various parameters of simulation instruments is inflexible, and the instruments are of high value. In addition, the instruments cannot always be kept in the test environment, nor can it carry out large-capacity tests. The other method is to simulate the interferences in the wireless channel, that is, artificially configure the parameters of the system end or the scheduling information of the user terminal to create an interference scenario, to implement the interference between the sending end and the receiving end. However, in the process of implementation of this method, the normal operation of the existing network system will be influenced, and in most cases, the test needs to be carried out in the outfield environment, imposing many limitations on the test conditions. In addition, the investment of manpower and material resources will be large, which is not suitable for automated test.

At present, no effective solution has been proposed for the problem that in certain cases, the channel interference to the data cannot be efficiently simulated.

### SUMMARY

Embodiments of the present disclosure provide an interference simulation system, method and apparatus, an interference test system, method and apparatus, and a computer-readable storage medium, to solve, at least to a certain extent, the problem that the channel interference to data cannot be efficiently simulated in some cases.

According to an embodiment of the present disclosure, an interference simulation system is provided. The interference simulation system is provided at a sending end, and may include a configuration unit and a simulation unit. The configuration unit is configured to configure interference parameters according to an interference model, and the interference model is generated according to a preset interference scenario. The simulation unit is configured to acquire the interference parameters and generate interference information according to the interference parameters. The simulation unit is further configured to simulate the interference scenario at the sending end according to the interference information.

According to another embodiment of the present disclosure, an interference test system is further provided. The interference test system may include the above-mentioned interference simulation system, and may further include a second scheduling unit, provided at a receiving end. The second scheduling unit is configured to receive data sent by the sending end under the condition of simulating the interference scenario, and measure the data to obtain an interference test result.

According to yet another embodiment of the present disclosure, further provided is an interference simulation method, applicable to a sending end. The method may include: generating an interference model according to a preset interference scenario, and configuring interference parameters according to the interference model; and generating interference information according to the interference parameters, and simulating the interference scenario at the sending end according to the interference information.

According to yet another embodiment of the present disclosure, further provided is an interference test method, applied to a receiving end. The method may include the above-mentioned interference simulation method, and may further include: receiving data sent by the sending end under the condition of simulating the interference scenario, and measuring the data to obtain an interference test result.

According to yet another embodiment of the present disclosure, an interference simulation apparatus is further provided. The interference simulation apparatus is provided at the sending end, and may include a configuration module and an interference module. The configuration module is configured to generate an interference model according to a preset interference scenario, and configure interference parameters according to the interference model. The interference module is configured to generate interference information according to the interference parameters, and simulate the interference scenario at the sending end according to the interference information.

According to yet another embodiment of the present disclosure, an interference test apparatus is further provided. The interference test apparatus includes the above-mentioned interference simulation apparatus, and may further include a receiving module. The receiving module is configured to receive data sent by the sending end under the condition of simulating the interference scenario, and measure the data to obtain an interference test result. The receiving module is provided at a receiving end.

According to still another embodiment of the present disclosure, further provided is a computer-readable storage medium storing a computer program which, when executed by a processor, causes the processor to carry out the above-mentioned methods.

According to still another embodiment of the present disclosure, further provided is an electronic apparatus including a memory and a processor. The memory has stored thereon computer-readable programs which, when executed by a processor, cause the processor to carry out the above-mentioned methods.

### BRIEF DESCRIPTION OF DRAWINGS

The accompanying drawings described herein are intended to provide further understanding of the present disclosure, and constitute part of the present disclosure. The illustrative embodiments of the present disclosure and descriptions thereof are intended to illustrate the present disclosure, and do not constitute an improper limitation on the present disclosure. In the drawings:
FIG. 1 is a schematic functional diagram (I) of an interference simulation system according to an embodiment of the present disclosure;
FIG. 2 is a schematic functional diagram (II) of an interference simulation system according to an embodiment of the present disclosure;
FIG. 3 is a schematic diagram of a time-domain white Gaussian noise interference simulation at a sending end according to an example in an embodiment of the present disclosure;
FIG. 4 is a schematic diagram of a signal interference scenario between 5G-ATG base stations according to an example in an embodiment of the present disclosure;
FIG. 5 is a schematic functional diagram of an interference test system according to an embodiment of the present disclosure;
FIG. 6 is a schematic diagram of the operation of the interference test system according to an embodiment of the present disclosure;
FIG. 7 is a schematic flowchart of an interference simulation method according to an embodiment of the present disclosure;
FIG. 8 is a schematic flowchart of an interference test method according to an embodiment of the present disclosure;
FIG. 9 is a schematic block diagram of an interference simulation apparatus according to an embodiment of the present disclosure;
FIG. 10 is a schematic block diagram of an interference test apparatus according to an embodiment of the present disclosure;
FIG. 11 is a schematic block diagram of an electronic apparatus according to an embodiment of the present disclosure; and
FIG. 12 is a schematic block diagram of an electronic apparatus according to an embodiment of the present disclosure.

### DETAILED DESCRIPTION

Hereinafter, the present disclosure will be described in detail with reference to the accompanying drawings and in conjunction with the embodiments. It should be noted that the embodiments of the present disclosure and the features in the embodiments may be combined with each other if not conflicted.

It should be noted that the terms "first", "second" and the like in the description, the claims and the accompanying drawings of the present disclosure are intended to distinguish similar objects, but are not necessarily intended to describe a specific sequence or a precedence order.

### Embodiment I

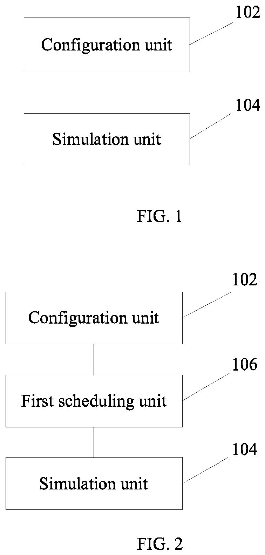

In this embodiment provided is an interference simulation system provided at a sending end. FIG. 1 is a schematic functional diagram of the interference simulation system according to this embodiment. As shown in FIG. 1, the system includes a configuration unit 102 and a simulation unit 104.

The configuration unit 102 is configured to configure interference parameters according to an interference model, where the interference model is generated according to a preset interference scenario.

The simulation unit 104 is configured to acquire the interference parameters and generate interference information according to the interference parameters. The simulation unit is further configured to simulate the interference scenario at the sending end according to the interference information.

It should be further noted that, the above-mentioned sending end is generally a base station or a terminal device. The above-mentioned configuration unit and simulation unit are both provided at the sending end of a wireless communication system, such as a base station side. The configuration unit may be integrated in a self-owned background of the wireless communication system, that is, the background configuration or monitoring module of the wireless communication system is set by software, to implement the function of the configuration unit in this embodiment.

The above-mentioned interference model represents a model constructed according to the interference scenario. Generally speaking, the interference model contains a number of configuration parameters or configuration commands, to reflect the possible influence of the corresponding interference scenario on data. The construction process of the above-mentioned interference model may be implemented by the interference simulation system in this embodiment, that is, the configuration unit constructs an interference model in real time according to the interference scenario to be simulated, or the configuration unit constructs different interference models according to different interference scenarios in advance and store the interference scenarios in the configuration unit, and the interference models corresponding to the interference scenarios to be simulated are read in the process of implementing interference simulation. In addition, the construction of the above-mentioned interference model may also be implemented by related systems or units other than those in this embodiment. For example, an operator generates the interference model according to the interference scenario at a PC side, and imports the model into the configuration unit. The construction time and process of the interference model are not limited in the present disclosure.

Meanwhile, in the configuration unit, configuring interference parameters according to the interference model means acquiring interference parameters for simulating interference scenarios according to configuration parameters or configuration commands set in the interference model. The interference parameters may be directly acquired by reading all the configuration parameters in the interference model, and the configuration parameters or the configuration commands in the interference model may also be reconfigured according to simulation requirements of actual interference scenarios. For example, according to the function of the interference scenario to be simulated, some of the configuration parameters are selected based on the interference model to form interference parameters, and then a specific function in the interference scenario represented by the interference model is simulated. Alternatively, some parameters are added based on the interference model to form interference parameters, to simulate an extended scenario of the interference scenario represented by the interference model.

It should be further noted that in this embodiment, the sending end maintains a normal workflow while the interference simulation system is working. Specifically, in the above-mentioned interference simulation process, the sending end instructs a sending link to process a scheduling configuration issued by a scheduling unit of the sending end according to a normal system processing flow, and generates corresponding data processed by a frequency domain unit and a time domain unit to send to a receiving end. Meanwhile, after acquiring the interference parameters configured by the configuration unit, the simulation unit may further generate interference information according to the interference parameters. The simulation unit simulates the corresponding interference scenario at the sending end according to the interference information, that is, the simulation unit simulates the interference at the sending end according to the interference information. The simulation unit may send the interference information to data processed at different stages by the sending end, such as the data in the scheduling processing, the time domain processing or the frequency domain processing mentioned above, to form interference-impaired data, and then send the data to the receiving end, thereby implementing the interference simulation at the sending end.

According to the interference simulation system in this embodiment, the configuration unit provided at the sending end may configure interference parameters according to an interference model, where the interference model is generated according to a preset interference scenario, and the simulation unit may acquire the interference parameters and generate interference information according to the interference parameters, to simulate the interference scenario at the sending end according to the interference information. Therefore, the interference simulation system in this embodiment can solve, at least to a certain extent, the problem that the channel interference to the data cannot be simulated efficiently in certain cases, so as to achieve the effect of significantly improving the implementation efficiency of the interference simulation.

Compared with some situations where interference simulation is performed in the wireless channel, the interference simulation system in this embodiment implements the simulation of interference at the sending end. Therefore, on the one hand, in the interference simulation process, the interference simulation system in this embodiment can perform targeted interference simulation on the data sent to a target receiving end without causing interference to the whole wireless channel, so that the operation of an existing network system will not be affected, thus reducing the operating cost in the simulation test process and improving the implementation efficiency. On the other hand, since the interference simulation has been implemented at the sending end in the above-mentioned interference simulation process, the interference simulation can be completed without adding a real interference terminal or an interference source in the wireless channel, so as to complete the test of the anti-interference ability of a corresponding product and the verification of the interference coordination processing mechanism of the system, thus significantly simplifying a function delivery process of a product. In addition, since the interference simulation only needs to be performed at the sending end, a tester can automatically implement the interference simulation at the location of the base station or by remotely operating the base station in the operation process, without the need for testing in the outfield environment, thus reducing the corresponding manpower and material cost and further significantly improving the implementation efficiency.

At the same time, the interference simulation system in this embodiment is implemented based on the corresponding interference parameters and the interference model constructed according to the interference scenario, and the interference model may be continuously enriched according to actual requirements and transplanted between different protocol version processing links, so that the interference simulation system in this embodiment also has good scalability. In addition, in the process of actual interference simulation, the interference simulation system in this embodiment may also configure interference parameters in real time according to actual requirements, so that the flexibility of interference simulation is significantly improved.

In an embodiment, the simulation unit 104 is further configured to superimpose the interference information into time-domain data and/or frequency domain data of the sending end, to simulate the interference scenario.

It should be further noted that the superposition of the above-mentioned interference information means that the simulation unit sends the interference information to the time-domain data generated by a time domain processing unit and/or the frequency domain data generated by a frequency domain processing unit of the sending end. In the actual interference simulation process, a superposition object of the interference information depends on the interference scenario to be simulated.

In an embodiment, the simulation unit 104 is further configured to superpose the interference information into the time-domain data and/or the frequency domain data of the sending end according to a preset weight, to simulate the interference scenario; and/or superimpose the interference information into the time-domain data and/or the frequency domain data within a preset period of the sending end, to simulate the interference scenario.

In an embodiment, the system further includes a first scheduling unit 106 configured to acquire the interference parameters and send the interference parameters to the simulation unit. The first scheduling unit 106 is further configured to process scheduling data of the sending end, where the scheduling data is configured to form the time-domain data and the frequency domain data.

It should be further noted that the scheduling data of the sending end of the first scheduling unit indicates that the first scheduling unit is a self-owned module of the wireless communication system, that is, the first scheduling unit is integrated in the wireless communication system, and is set by software, so as to implement the function of acquiring the interference parameters and send the interference parameters to the simulation unit, which corresponds to the first scheduling unit in this embodiment. FIG. 2 is a schematic functional diagram (II) of the interference simulation system according to an embodiment of the present disclosure, and the setting of the first scheduling unit 106 is shown in FIG. 2.

In an embodiment, the interference scenario includes at least one selected from a group consisting of:
a time offset interference scenario, a frequency offset interference scenario, a frequency domain inter-subband interference scenario, a frequency selective interference scenario and an intersymbol interference scenario.

In order to further illustrate the operation mode of the interference simulation system in this embodiment, the flow of different interference scenarios simulated by the interference simulation system in this embodiment will be illustrated by way of several examples.

### Example I

The interference scenario in this example is frequency domain interference at the sending end. In a wireless system, it is a common phenomenon that frequency domain interference occurs between different user terminals due to the conflict of frequency-domain resource allocation or the overlapping of frequency-domain resource allocation of different terminal users in a handover buffer area. In this example, the process of simulating the frequency domain interference of the sending end includes steps S1 to S7.

At S1, the configuration unit configures corresponding interference parameters according to a frequency-domain interference model, where the interference parameters include a frequency-domain resource overlap ratio parameter, a frequency-domain interference power amplitude, and the like.

At S2, the first scheduling unit obtains frequency-domain resource allocation during normal system processing.

At S3, the first scheduling unit sends the frequency-domain resource allocation during normal system processing, the frequency-domain resource overlap ratio parameter and the frequency-domain interference power amplitude of the interference parameters to the simulation unit.

At S4, the simulation unit generates interference information according to the normally scheduled frequency-domain resources, the frequency-domain resource overlap ratio parameter, the frequency-domain interference power amplitude, and the like, which is the interference frequency domain data of a frequency-domain resource overlap portion in this example.

At S5, the first scheduling unit performs frequency-domain resource scheduling processing of normal communication, and generates normally processed frequency domain data.

At S6, the frequency domain data generated by the normal processing of the sending end and the interference frequency domain data generated by the interference simulation unit are subjected to weighted superposition, to perform interference simulation on the frequency domain data.

At S7, the frequency domain data after interference simulation processing is sent out by radio frequency after subjected to subsequent processing, and reaches the receiving end through a spatial wireless channel, and the data received by the receiving end is data containing the frequency domain interference information.

At S3 and S4 of this example, the interference parameters include, but are not limited to, the frequency-domain resource overlap ratio parameter and the frequency-domain interference power amplitude. At S6, in the weighted superposition of the interference frequency domain data and the normal data, different weights may be applied in the frequency domain according to objects such as RE, PRB, and the like. It is also possible to flexibly choose whether to apply the same interference to all frequency domain symbols or only certain symbols, and the period of applying interference may also be configured through the background.

### Example II

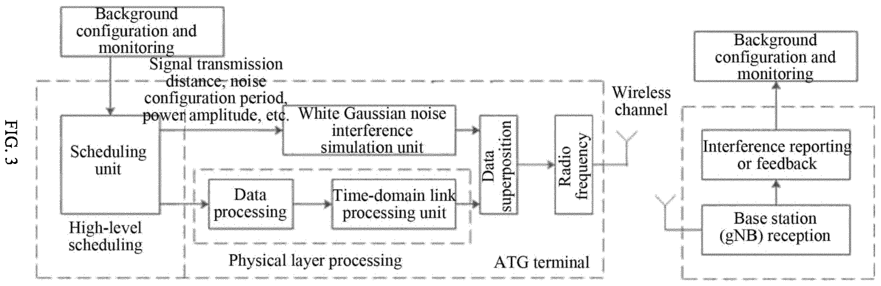

In this example, the interference scenario is time-domain white Gaussian noise interference at a 5G-ATG sending end. Specifically, in the 5G ground-air interconnection system, due to a large coverage radius, data of the sending end is transmitted over a long distance, and the signal is greatly attenuated by the interference. Therefore, 5G-ATG, as a terminal device, shall be subjected to interference test of outfield environment before commercial deployment. It is a common interference scenario that the data sent by the ATG terminal passes through an air interface and a wireless channel to be interfered by white Gaussian noise generated during the long-distance transmission in space. In this interference scenario, time-domain sample data of the sending end will be superimposed and interfered by random noise sample data. FIG. 3 is a schematic diagram of a time-domain white Gaussian noise interference simulation of the sending end according to an example of the present disclosure. As shown in FIG. 3, the process of simulating the time-domain white Gaussian noise interference of the 5G-ATG sending end in this example includes steps S1 to S6.

At S1, the configuration unit configures corresponding interference parameters according to an interference model corresponding to the time-domain white Gaussian noise interference of the 5G-ATG sending end, where the corresponding interference parameters include a noise amplitude parameter, a noise random function configuration, a signal transmission distance, and the like.

At S2, the first scheduling unit configures the interference parameters to the simulation unit.

At S3, the simulation unit generates random noise sample data according to the interference parameters.

At S4, the first scheduling unit performs scheduling processing of normal communication, and time-domain data generated by the normal processing at the sending end and random noise sample data generated by the simulation unit are subjected to superposition processing.

At S5, the time-domain data after noise simulation processing is sent out by radio frequency.

At S6, the data sent from an antenna port of the ATG sending end is transmitted through space and will contain Gaussian noise interference information after reaching the receiving end, and the receiving end receives and processes the data.

At S3 and S4, the timing of noise generation may also be controlled in random noise samples, and noise interference may be loaded on all time-domain symbols or only time-domain symbols in certain scheduling periods or certain symbols in a certain scheduling period. The generation and loading of noise may be flexibly controlled, to simulate and test more interference processes. The above-mentioned Gaussian noise interference may also be replaced by other noise models, as long as a corresponding model is added to the configuration unit.

### Example III

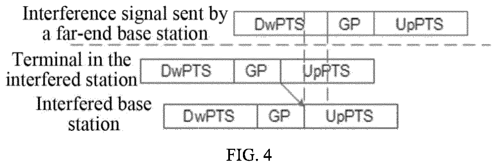

In this example, the interference scenario is signal interference between 5G-ATG base stations. Specifically, in the 5G ground-air interconnection system, due to a super-large coverage radius, the transmission power of base stations is high, so that a time division duplexing (TDD) inter-base station interference scenario will occur. FIG. 4 is a schematic diagram of a signal interference scenario between 5G-ATG base stations according to an example of the present disclosure. As shown in FIG. 4, between the two red lines, part of the signal sent by a far-end base station is aligned with a receiving time of an interfered base station. At this time, the data sent by a 5G-ATG terminal device accessing the interfered base station to the interfered base station will be superimposed into a receiving time slot of the interfered base station together with the interference data sent by the far-end base station, which will cause the data sent by the 5G-ATG terminal device received by the interfered base station to be interfered. In this example, the process of simulating the signal interference between 5G-ATG base stations includes steps S1 to S6.

At S1, the configuration unit of the ATG terminal device configures the interference parameters according to the signal interference model between the 5G-ATG base stations, where the interference parameters include type of signal sent by some DwPTS symbols of the base station, related parameters, a cell distance, and the like.

At S2, the first scheduling unit of the ATG terminal device sends the interference parameters to the simulation unit, and the simulation unit generates interference information according to the interference parameters.

At S3, the ATG terminal device establishes a normal wireless data connection with the interfered 5G base station; the first scheduling processing unit normally schedules a scheduling request issued by the interfered base station to the terminal device; and the ATG terminal device normally processes the scheduling data.

At S4, the simulation unit aligns, at a corresponding sending time of the terminal device, the generated interference information of the far-end base station with the time-domain data generated by the normal processing of the terminal device, and superimposes the interference information with the normal data of the sending end in a weighted manner while considering the distance of the far-end base station, and the like.

At S5, the time-domain data after noise simulation processing is sent out by radio frequency.

At S6, the data sent by the antenna port of the ATG sending end is transmitted through the wireless channel and will contain the interference information sent by the far-end base station after being received by the base station, and the receiving end of the base station receives and processes the data.

### Embodiment II

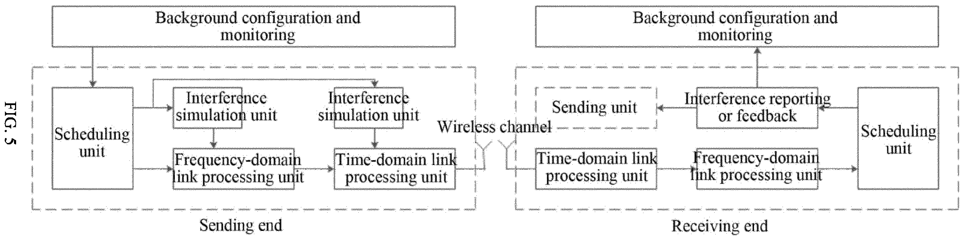

This embodiment provides an interference test system, including the interference simulation system described in Embodiment I. FIG. 5 is a schematic functional diagram of the interference test system according to the embodiment of the present disclosure. As shown in FIG. 5, the interference test system in this embodiment further includes a second scheduling unit 108 provided at a receiving end. The second scheduling unit is configured to receive data sent by a sending end under the condition of simulating the interference scenario, and measure the data to obtain an interference test result.

It should be further noted that the receiving end corresponds to the sending end. For example, the sending end is a base station and the receiving end is a terminal device, or the sending end is a terminal device and the receiving end is a base station. The second scheduling unit corresponds to the first scheduling unit, that is, if the first scheduling unit is a scheduling unit provided in the sending end, the second scheduling unit is a scheduling unit provided in the receiving end. In this embodiment, on the basis that the interference simulation system implements interference simulation at the sending end, data received by the receiving end through a wireless channel is interference-impaired data, so that an interference test result of the data can be obtained by measuring the data received by the receiving end through the second scheduling unit, and then the test of the receiving performance or anti-interference ability of the device can be completed.

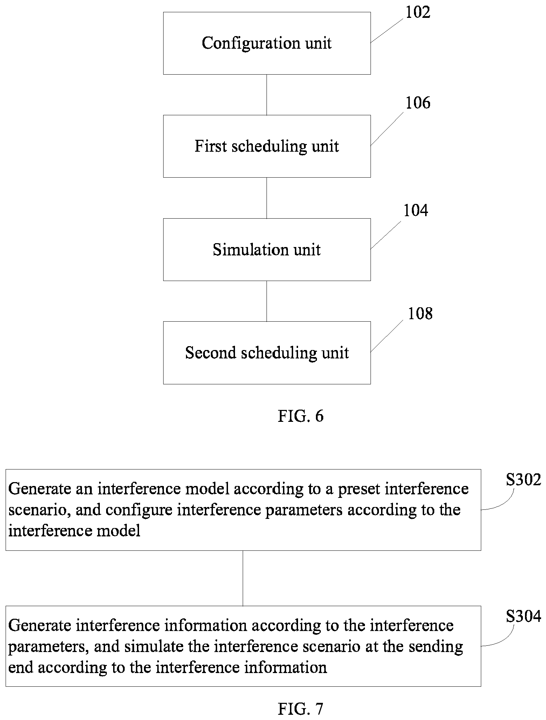

After obtaining the interference test result, the second scheduling unit may feedback the interference test result to the background. For example, when the sending end is a base station, the second scheduling unit may directly feedback the interference test result to the configuration unit. When the sending end is a terminal device, the second scheduling unit may feedback the interference test result to background configuration or a monitoring unit on a base station side. FIG. 6 is a schematic diagram of the operation of the interference test system according to the embodiment of the present disclosure, and the operation mode of the interference test system in this embodiment is shown in FIG. 6.

According to the interference test system in this embodiment, the configuration unit provided at the sending end may configure interference parameters according to an interference model, where the interference model is generated according to a preset interference scenario. The simulation unit may acquire the interference parameters and generate interference information according to the interference parameters, to simulate the interference scenario at the sending end according to the interference information. At the same time, the second scheduling unit provided at the receiving end may receive data sent by the sending end under the condition of simulating the interference scenario, and measure the data to obtain an interference test result. Therefore, the interference test system in this embodiment can solve, at least to a certain extent, the problem that the channel interference to the data cannot be simulated efficiently in certain cases, so as to achieve the effect of significantly improving the implementation efficiency of the interference simulation, and further complete the test of anti-interference ability and other performances.

Other technical schemes and technical effects of the interference simulation system in this embodiment correspond to those of the interference simulation system in Embodiment one, which will not be repeated here.

### Embodiment III

This embodiment provides an interference simulation method applied to a sending end. FIG. 7 is a flowchart of the interference simulation method according to the embodiment of the present disclosure. As shown in FIG. 7, the interference simulation method in this embodiment includes steps S302 and S304.

At S302, an interference model is generated according to a preset interference scenario, and interference parameters are configured according to the interference model.

At S304, interference information is generated according to the interference parameters, and the interference scenario is simulated at the sending end according to the interference information.

It should be further noted that, the sending end is generally a base station or a terminal device. At S302, the interference model represents a model constructed according to the interference scenario. Generally speaking, the interference model contains a number of configuration parameters or configuration commands, to reflect possible influences of the corresponding interference scenario on data. The construction of the interference model may be carried out in real time during the process of interference simulation. In other words, the interference model is constructed in real time according to the interference scenario to be simulated, or different interference models are constructed according to different interference scenarios in advance and stored in a relevant system or unit at the sending end, and the interference models corresponding to the interference scenarios to be simulated are read during the process of interference simulation. In addition, the construction of the interference model may also be implemented by a unit for configuring interference parameters, such as a configuration unit, or by a related system or unit independent of the interference simulation method in this embodiment. For example, an operator generates an interference model according to an interference scenario at a PC side and store the model in a related system or unit at the sending end. The construction time and process of the interference model are not limited in the present disclosure.

At the same time, at S302, configuring interference parameters according to the interference model means acquiring interference parameters for simulating interference scenarios according to configuration parameters or configuration commands set in the interference model. The interference parameters may be directly acquired by reading all the configuration parameters in the interference model, and the configuration parameters or the configuration commands in the interference model may also be reconfigured according to simulation requirements of actual interference scenarios. For example, according to the function of the interference scenario to be simulated, some of the configuration parameters are selected based on the interference model to form interference parameters, and then a specific function in the interference scenario represented by the interference model is simulated. Alternatively, based on the interference model, some parameters are added based on the interference model to form interference parameters, to simulate an extended scenario of the interference scenario represented by the interference model.

The S302 may be implemented by the sending end, and specifically, setting is performed by software in the background configuration or monitoring module of the wireless communication system, to implement the operation of S302 in this embodiment.

It should be further noted that in this embodiment, the sending end maintains a normal workflow while the interference simulation method is working. Specifically, in the above-mentioned interference simulation process, the sending end instructs a sending link to process a scheduling configuration issued by a scheduling unit of the sending end according to a normal system processing flow, and generates corresponding data processed by a frequency domain unit and a time domain unit to send to a receiving end. At the same time, at S304, a corresponding interference scenario may be simulated at the sending end according to the generated interference information, that is, the sending end may simulate the interference according to the interference information. The interference information may be sent to data processed by the sending end at different stages by the sending end, such as the data in the scheduling processing, the time domain processing or the frequency domain processing mentioned above, to form interference-impaired data, and then send the data to the receiving end, thereby implementing the interference simulation at the sending end.

According to the interference simulation method in this embodiment, an interference model can be generated according to a preset interference scenario, and the interference parameters can be configured according to the interference model. At the same time, the interference information can be generated according to the interference parameters, and then the interference scenario can be simulated at the sending end according to the interference information. Therefore, the interference simulation method in this embodiment can solve, at least to a certain extent, the problem that the channel interference to the data cannot be simulated efficiently in certain cases, so as to achieve the effect of significantly improving the implementation efficiency of the interference simulation.

Compared with some situations where interference simulation is performed in the wireless channel, the interference simulation method in this embodiment implements the simulation of interference at the sending end. Therefore, on the one hand, in the interference simulation process, the interference simulation method in this embodiment can perform targeted interference simulation on the data sent to a target receiving end without causing interference to the whole wireless channel, so that the operation of an existing network system will not be influenced, thus reducing the operating cost in the simulation test process and improving the implementation efficiency. On the other hand, since the interference simulation has been implemented at the sending end in the above-mentioned interference simulation process, the interference simulation can be completed without adding a real interference terminal device or an interference source in the wireless channel, so as to complete the test of the anti-interference ability of a corresponding product and the verification of the interference coordination processing mechanism of the system, thus significantly simplifying a function delivery process of a product. In addition, since the interference simulation only needs to be performed at the sending end, a tester can automatically implement the interference simulation at the location of the base station by remotely operating the base station in the operation process, without the need for testing in the outfield environment, thus reducing the corresponding manpower and material cost and further significantly improving the implementation efficiency.

At the same time, the interference simulation method in this embodiment is implemented based on the corresponding interference parameters and the interference model constructed according to the interference scenario, and the interference model may be continuously enriched according to actual requirements and transplanted between different protocol version processing links, so that the interference simulation system in this embodiment also has good scalability. In addition, in the process of actual interference simulation, the interference simulation method in this embodiment may also configure interference parameters in real time according to actual requirements, so that the flexibility of interference simulation is significantly improved.

In an embodiment, at S304, the simulating the interference scenario at the sending end according to the interference information includes superimposing the interference information into time-domain data and/or frequency domain data of the sending end, to simulate the interference scenario.

It should be further noted that the superposition of the above-mentioned interference information means that the interference information is sent to the time-domain data generated by a time domain processing unit and/or a frequency domain data generated by the frequency domain processing unit of the sending end. In the actual interference simulation process, a superposition object of the interference information depends on the interference scenario to be simulated.

In an embodiment, the superimposing the interference information into time-domain data and/or frequency domain data of the sending end, to simulate the interference scenario further includes:
superposing the interference information into the time-domain data and/or the frequency domain data of the sending end according to a preset weight, to simulate the interference scenario; and/or
superimposing the interference information into the time-domain data and/or the frequency domain data, within a preset period, of the sending end, to simulate the interference scenario.

In an embodiment, the interference scenario includes at least one of
a time offset interference scenario, a frequency offset interference scenario, a frequency domain inter-subband interference scenario, a frequency selective interference scenario and an intersymbol interference scenario.

From the description of the above implementations, it is clear to a person having ordinary skills in the art that the method according to the above embodiments may be implemented by means of software plus a necessary general hardware platform, or by hardware, but in many cases, the former is a better implementation. Based on this understanding, the essence of the technical schemes of the present disclosure or the part that contributes to the existing technology may be embodied in the form of a software product, and the computer software product may be stored in a storage medium (such as a ROM/RAM, a magnetic disk, or an optical disk) and may include several instructions to make a terminal device (such as a mobile phone, a computer, a server or a network device, and the like) execute the methods described in various embodiments of the present disclosure.

### Embodiment IV

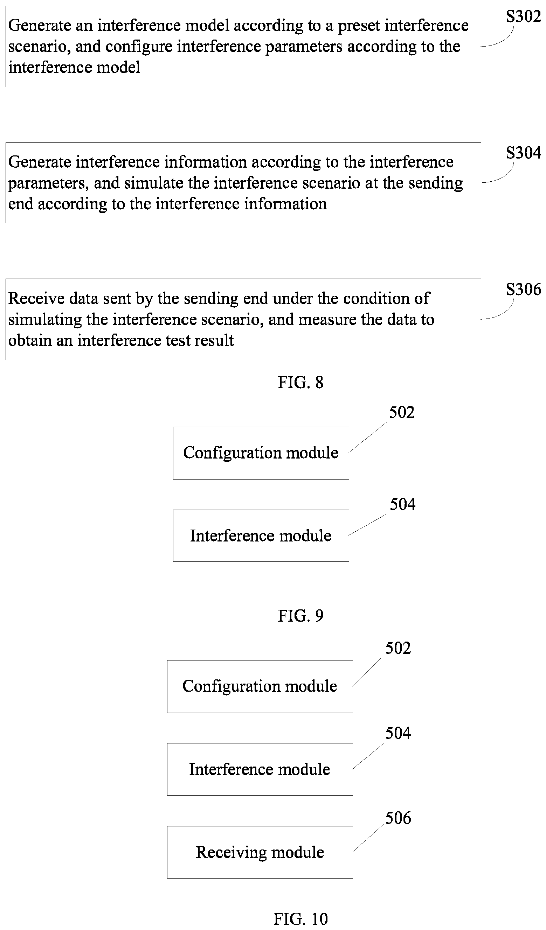

This embodiment further provides an interference test method applied to a receiving end. The method includes the interference simulation method in Embodiment III. FIG. 8 is a flowchart of the interference test method according to the embodiment of the present disclosure. As shown in FIG. 8, the interference test method in this embodiment further includes step S306.

At S306, data sent by the sending end under the condition of simulating an interference scenario is received, and data is measured to obtain an interference test result.

It should be further noted that the receiving end corresponds to the sending end. For example, the sending end is a base station and the receiving end is a terminal device, or the sending end is a terminal device and the receiving end is a base station. At S306, on the basis that the interference simulation system implements interference simulation at the sending end, the data received by the receiving end through a wireless channel is interference-impaired data, so that an interference test result of the data can be obtained by measuring the data received by the receiving end, and then the test of the receiving performance or anti-interference ability of the device can be completed.

At S306, after obtaining the interference test result, the second scheduling unit may feedback the interference test result to the background. For example, when the sending end is a base station, the interference test result may be directly fed back to the configuration unit. When the sending end is a terminal device, the interference test result may be fed back to the background configuration or monitoring unit on the base station side.

According to the interference test method in this embodiment, an interference model can be generated according to a preset interference scenario, and the interference parameters can be configured according to the interference model. At the same time, interference information can be generated according to the interference parameters, and then the interference scenario can be simulated at the sending end according to the interference information. The data sent by the sending end under the condition of simulating the interference scenario is received, and the data is measured to obtain an interference test result. Therefore, the interference simulation method in this embodiment can solve, at least to a certain extent, the problem that the channel interference to the data cannot be simulated efficiently in certain cases, so as to achieve the effect of significantly improving the implementation efficiency of the interference simulation, and further complete the test of anti-interference ability and other performances.

Other technical schemes and technical effects of the interference simulation method in this embodiment correspond to those of the interference simulation method in Embodiment three, which will not be repeated here.

From the description of the implementations, it is clear to a person having ordinary skills in the art that the method according to the above embodiments may be implemented by means of software plus a necessary general hardware platform, or by hardware, but in many cases, the former is a better implementation. Based on this understanding, the essence of the technical schemes of the present disclosure or the part that contributes to the existing technology may be embodied in the form of a software product, and the computer software product may be stored in a storage medium (such as a ROM/RAM, a magnetic disk, or an optical disk) and may include several instructions to make a terminal device (such as a mobile phone, a computer, a server or a network device, and the like) execute the methods described in various embodiments of the present disclosure.

### Embodiment V

In this embodiment, an interference simulation apparatus is provided. The interference simulation apparatus is provided a the sending end, and is configured to implement the above embodiments and some implementations. What has been described will not be repeated here. As used below, the term "module" may be a combination of software and/or hardware that can implement a predetermined function. Although the apparatus described in the following embodiments is preferably implemented by software, the implementation by hardware, or a combination of software and hardware, is also possible and contemplated. FIG. 9 is a structural block diagram of an interference simulation apparatus according to an embodiment of the present disclosure. As shown in FIG. 9, the interference simulation apparatus in this embodiment includes a configuration module 502 and an interference module 504.

The configuration module 502 is configured to generate an interference model according to a preset interference scenario, and configure interference parameters according to the interference model.

The interference module 504 is configured to generate interference information according to the interference parameters, and simulate the interference scenario at the sending end according to the interference information.

According to the interference simulation apparatus in this embodiment, an interference model can be generated according to the preset interference scenario, and interference parameters can be configured according to an interference model. At the same time, interference information can be generated according to the interference parameters, and then the interference scenario can be simulated at the sending end according to the interference information. Therefore, the interference simulation apparatus in this embodiment can solve, at least to a certain extent, the problem that the channel interference to the data cannot be simulated efficiently in certain cases, so as to achieve the effect of significantly improving the implementation efficiency of the interference simulation.

Other technical schemes and technical effects in this embodiment correspond to the interference simulation method in Embodiment three, which will not be repeated here.

In an embodiment, the interference module 504 is further configured to superimpose the interference information into time-domain data and/or frequency domain data of the sending end, to simulate the interference scenario.

It should be further noted that the superposition of the above-mentioned interference information means that the interference information is sent to the time-domain data generated by a time domain processing unit and/or a frequency domain data generated by the frequency domain processing unit of the sending end. In the actual interference simulation process, a superposition object of the interference information depends on the interference scenario to be simulated.

In an embodiment, the interference module 504 is further configured to
superpose the interference information into the time-domain data and/or the frequency domain data of the sending end according to a preset weight, to simulate the interference scenario; and/or superimpose the interference information into the time-domain data and/or the frequency domain data within a preset period of the sending end, to simulate the interference scenario.

In an embodiment, the interference scenario includes at least one selected from a group consisting of:
a time offset interference scenario, a frequency offset interference scenario, a frequency domain inter-subband interference scenario, a frequency selective interference scenario and an intersymbol interference scenario.

It should be noted that the above modules may be implemented by software or hardware, while the implementation by the latter may include but not limited to: disposing all the above modules in the same processor; or, disposing the above modules in different processors in any combination.

### Embodiment VI

In this embodiment, an interference test apparatus is provided. The interference test apparatus includes the interference simulation apparatus in Embodiment V, and is configured to implement the above embodiments and some implementations. What has been described will not be repeated here. As used below, the term "module" may be a combination of software and/or hardware that can implement a predetermined function. Although the apparatus described in the following embodiments is preferably implemented by software, the implementation by hardware, or a combination of software and hardware, is also possible and contemplated. FIG. 10 is a structural block diagram of an interference test apparatus according to an embodiment of the present disclosure. As shown in FIG. 10, the interference test apparatus in this embodiment further includes a receiving module 506 configured to receive data sent by a sending end under the condition of simulating an interference scenario, and measure the data to obtain an interference test result.

The receiving module 506 is provided at a receiving end.

According to the interference test apparatus in this embodiment, an interference model can be generated according to a preset interference scenario, and interference parameters can be configured according to the interference model. At the same time, interference information can be generated according to the interference parameters, and then the interference scenario can be simulated at the sending end according to the interference information. The data sent by the sending end under the condition of simulating the interference scenario is received, and the data is measured to obtain an interference test result. Therefore, the interference test apparatus in this embodiment can solve, at least to a certain extent, the problem that the channel interference to the data cannot be efficiently simulated in a certain situation, so as to achieve the effect of significantly improving the implementation efficiency of interference simulation, and further complete the test of anti-interference ability and other performances.

Other technical schemes and technical effects in this embodiment correspond to the interference test method in Embodiment four, which will not be repeated here.

It should be noted that the above modules may be implemented by software or hardware, while the implementation by the latter may include but not limited to: disposing all the above modules in the same processor; or, disposing the above modules in different processors in any combination.

### Embodiment VII

The embodiment of the present disclosure further provides a computer-readable storage medium storing a computer program which, when executed by a processor, causes the processor to carry out the above-mentioned methods.

In this embodiment, the computer-readable storage medium may be configured to store a computer program for performing steps S1 and S2.

At S1, an interference model is generated according to a preset interference scenario, and interference parameters are configured according to the interference model.

At S2, interference information is generated according to the interference parameters, and the interference scenario is simulated at a sending end according to the interference information.

In this embodiment, the computer-readable storage medium may include, but is not limited to, a USB flash drive, a read-only memory (ROM), a random-access memory (RAM), a removable hard disk, a magnetic disk or an optical disk and other medium that can store a computer program.

### Embodiment VIII

The embodiment of the present disclosure further provides a computer-readable storage medium storing a computer program which, when executed by a processor, causes the processor to carry out the above-mentioned methods.

In this embodiment, the computer-readable storage medium may be configured to store a computer program for performing steps S1 to S3.

At S1, an interference model is generated according to a preset interference scenario, and interference parameters are configured according to the interference model.

At S2, interference information is generated according to the interference parameters, and the interference scenario is simulated at a sending end according to the interference information.

At S3, the interference information is superimposed into time-domain data and/or frequency domain data of the sending end, to simulate the interference scenario.

In this embodiment, the computer-readable storage medium may include, but is not limited to, a USB flash drive, a read-only memory (ROM), a random-access memory (RAM), a removable hard disk, a magnetic disk or an optical disk and other medium that can store a computer program.

### Embodiment IX

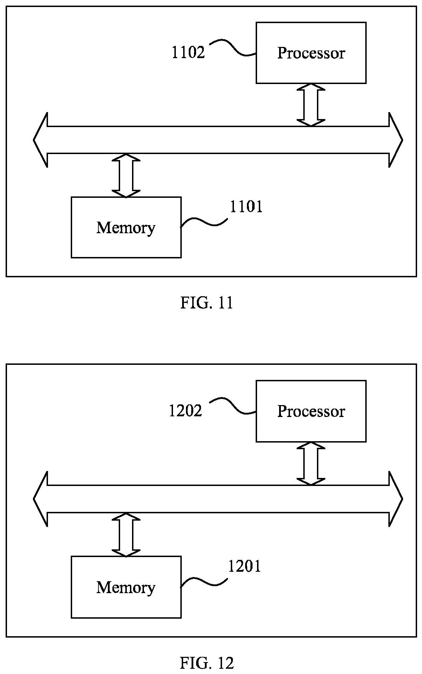

As shown in FIG. 11, the embodiment of the present disclosure further provides an electronic apparatus, which includes a memory 1101 and a processor 1102. The memory 1101 a computer program which, when executed by the processor, causes the processor to carry out any of the above methods.

The electronic apparatus may further include a transmission device and an input/output device. The transmission device is connected to the processor 1102, and the input/output device is connected to the processor.

In this embodiment, the processor 1102 may be configured to perform steps S1 and S2 through the computer program.

At S1, an interference model is generated according to a preset interference scenario, and interference parameters are configured according to the interference model.

At S2, interference information is generated according to the interference parameters, and the interference scenario is simulated at a sending end according to the interference information.

For examples in this embodiment, reference may be made to the foregoing embodiments and the examples described therein, and details are not repeated here in this embodiment.

### Embodiment X

As shown in FIG. 12, the embodiment of the present disclosure further provides an electronic apparatus, which includes a memory 1201 and a processor 1202. The memory 1201 stores a computer program which, when executed by the processor, causes the processor to carry out any of the above methods.

The electronic apparatus may further include a transmission device and an input/output device. The transmission device is connected to the processor 1202, and the input/output device is connected to the processor.

In this embodiment, the processor 1202 may be configured to perform steps S1 to S3 through the computer program.

At S1, an interference model is generated according to a preset interference scenario, and interference parameters are configured according to the interference model.

At S2, interference information is generated according to the interference parameters, and the interference scenario is simulated at a sending end according to the interference information.

At S3, the interference information is superimposed into time-domain data and/or frequency domain data of the sending end, to simulate the interference scenario.

For examples in this embodiment, reference may be made to the foregoing embodiments and the examples described therein, and details are not repeated here in this embodiment.

According to the present disclosure, a configuration unit provided at the sending end may configure interference parameters according to an interference model, where the interference model is generated according to a preset interference scenario. The simulation unit may acquire the interference parameters and generate interference information according to the interference parameters, to simulate the interference scenario at the sending end according to the interference information. Therefore, the present disclosure can solve, at least to a certain extent, the problem that the channel interference to the data cannot be simulated efficiently in certain cases, so as to achieve the effect of significantly improving the implementation efficiency of the interference simulation.

Obviously, a person having ordinary skills in the art should understand that the above modules or steps of the present disclosure may be implemented by a general-purpose computing apparatus, which may be centralized on a single computing apparatus or distributed in a network composed of multiple computing apparatuses. They may be implemented by program codes executable by a computing apparatus, so that they may be stored in a storage apparatus and executed by the computing apparatus. And in certain cases, they may be implemented by steps shown or described in a different sequence than shown here, or they may be separately made into individual integrated circuit modules, or multiple modules or steps among them may be made into a single integrated circuit module. Thus, the present disclosure is not limited to any specific combination of hardware and software.

The above descriptions are only some embodiments of the present disclosure, and are not intended to limit the present disclosure. For a person having ordinary skills in the art, the present disclosure may be modified and changed in various ways. Any modification, equivalent replacement, improvement, and the like made within the principle of the present disclosure shall fall within the protection scope of the present disclosure.

## Claims

1. An interference simulation system, provided at a sending end, the system comprising:
a configuration unit, configured to configure interference parameters according to an interference model, wherein the interference model is generated according to a preset interference scenario; and
a simulation unit, configured to acquire the interference parameters and generate interference information according to the interference parameters, wherein the simulation unit is further configured to simulate the interference scenario at the sending end according to the interference information.

2. The system of claim 1, wherein the simulation unit is further configured to:
superimpose the interference information into time-domain data and/or frequency domain data of the sending end, to simulate the interference scenario.

3. The system of claim 2, wherein the simulation unit is further configured to:
superpose the interference information into the time-domain data and/or the frequency domain data of the sending end according to a preset weight, to simulate the interference scenario; and/or
superimpose the interference information into the time-domain data and/or the frequency domain data of the sending end within a preset period, to simulate the interference scenario.

4. The system of claim 2 or 3, further comprising:
a first scheduling unit, configured to acquire the interference parameters and send the interference parameters to the simulation unit, wherein the first scheduling unit is further configured to process scheduling data of the sending end, and the scheduling data is configured to form the time-domain data and the frequency domain data.

5. The system of claim 1, wherein the interference scenario comprises at least one of following scenarios:
a time offset interference scenario, a frequency offset interference scenario, a frequency domain inter-subband interference scenario, a frequency selective interference scenario and an intersymbol interference scenario.

6. An interference test system, comprising the interference simulation system of any one of claims 1 to 5, wherein the interference test system further comprises:
a second scheduling unit, provided at a receiving end and configured to receive data sent by the sending end under a condition of simulating the interference scenario, and measure the data to obtain an interference test result.

7. An interference simulation method, applicable to a sending end, comprising:
generating an interference model according to a preset interference scenario, and configuring interference parameters according to the interference model; and
generating interference information according to the interference parameters, and simulating the interference scenario at the sending end according to the interference information.

8. The method of claim 7, wherein the simulating the interference scenario at the sending end according to the interference information comprises:
superimposing the interference information into time-domain data and/or frequency domain data of the sending end, to simulate the interference scenario.

9. The method of claim 8, wherein the superimposing the interference information into time-domain data and/or frequency domain data of the sending end, to simulate the interference scenario comprises:
superposing the interference information into the time-domain data and/or the frequency domain data of the sending end according to a preset weight, to simulate the interference scenario; and/or
superimposing the interference information into the time-domain data and/or the frequency domain data of the sending end within a preset period, to simulate the interference scenario.

10. The method of any one of claims 7 to 9, wherein the interference scenario comprises at least one of following scenarios:
a time offset interference scenario, a frequency offset interference scenario, a frequency domain inter-subband interference scenario, a frequency selective interference scenario and an intersymbol interference scenario.

11. An interference test method applied to a receiving end, comprising the interference simulation method of any one of claims 7 to 10, wherein the interference test method further comprises:
receiving data sent by the sending end under a condition of simulating the interference scenario, and measuring the data to obtain an interference test result.

12. An interference simulation apparatus, provided at a sending end, comprising:
a configuration module, configured to generate an interference model according to a preset interference scenario, and configure interference parameters according to the interference model; and
an interference module, configured to generate interference information according to the interference parameters, and simulate the interference scenario at the sending end according to the interference information.

13. An interference test apparatus, comprising the interference simulation apparatus of claim 12, wherein the interference test apparatus further comprises:
a receiving module, configured to receive data sent by the sending end under a condition of simulating the interference scenario, and measure the data to obtain an interference test result;
wherein the receiving module is provided at a receiving end.

14. A computer-readable storage medium storing a computer program which, when executed by a processor, cause the processor to carry out the method of any one of claims 7 to 10 and claim 11.

15. An electronic apparatus, comprising a memory and a processor, wherein the memory stores a computer program which, when executed by the processor, cause the processor to carry out the method of any one of claims 7 to 10 and claim 11.
